**Europäisches Patentamt**

**European Patent Office**

**Office européen des brevets**

(19)

(11) Veröffentlichungsnummer: **0 064 296**
**B1**

(12) # EUROPÄISCHE PATENTSCHRIFT

(45) Veröffentlichungstag der Patentschrift:
**14.08.85**

(51) Int. Cl.⁴: **B 41 F 23/04,** F 16 K 11/085

(21) Anmeldenummer: **82103816.3**

(22) Anmeldetag: **04.05.82**

(54) **Drehschieber für Lüftungskanäle.**

(30) Priorität: **06.05.81 DE 8113351 U**

(43) Veröffentlichungstag der Anmeldung:
**10.11.82 Patentblatt 82/45**

(45) Bekanntmachung des Hinweises auf die Patenterteilung:
**14.08.85 Patentblatt 85/33**

(84) Benannte Vertragsstaaten:
**FR GB IT**

(56) Entgegenhaltungen:
**CH - A - 195 409**
**CH - A - 373 236**
**DE - B - 1 262 296**
**FR - A - 2 484 045**

(73) Patentinhaber: **Windmöller & Hölscher,**
**Münsterstrasse 48-52, D-4540 Lengerich i.W. (DE)**

(72) Erfinder: **Köwener, Günter, Wallheckenstrasse 2,**
**D-4540 Lengerich (DE)**

(74) Vertreter: **Lorenz, Eduard et al, Rechtsanwälte Lorenz,**
**Eduard - Seidler, Bernhard Seidler, Margrit - Gossel,**
**Hans-K. Philipps, Ina, Dr. Widenmayerstrasse 23,**
**D-8000 München 22 (DE)**

ACTORUM AG

## Beschreibung

Die Erfindung betrifft einen Drehschieber für Lüftungskanäle nach dem Oberbegriff des Patentanspruchs.

Bei einem aus CH-A-195 409 bekannten Drehschieber dieser Art liegen die Mündungen der Anschlussstutzen etwa mittig auf sich rechtwinkelig kreuzenden Durchmesserlinien des zylindrischen Mantels, so dass die Durchmesser der Anschlussstutzen in ihrer Grösse durch die zwischen zwei Anschlussstutzen befindlichen Mantelstücke begrenzt sind, deren Umfangslänge mindestens so gross sein muss, dass sie die stirnseitigen Öffnungen des durch die Leitfläche gebildeten Kanals abdecken.

Aufgabe der Erfindung ist es, einen Drehschieber nach dem Oberbegriff des Patentanspruchs mit widerstandsarmen Strömungsquerschnitten der Anschlussstutzen zu schaffen.

Erfindungsgemäss wird diese Aufgabe durch die kennzeichnenden Merkmale des Patentanspruchs gelöst.

Die erfindungsgemässe Anordnung der Anschlussstutzen gestattet es, deren Querschnitte ohne Beeinträchtigung der Stellfunktionen beträchtlich zu vergrössern.

Ein Ausführungsbeispiel der Erfindung wird nachstehend anhand der Zeichnung näher erläutert. In dieser zeigt:

Fig. 1 eine Seitenansicht der Schalt- und Mischkammer, teilweise im Schnitt,

Fig. 2 einen Schnitt durch die Kammer nach Fig. 1 längs der Linie II-II und

Fig. 3 eine schematische Seitenansicht der Kammer mit verschiedenen Stellungen der Stelleinrichtung.

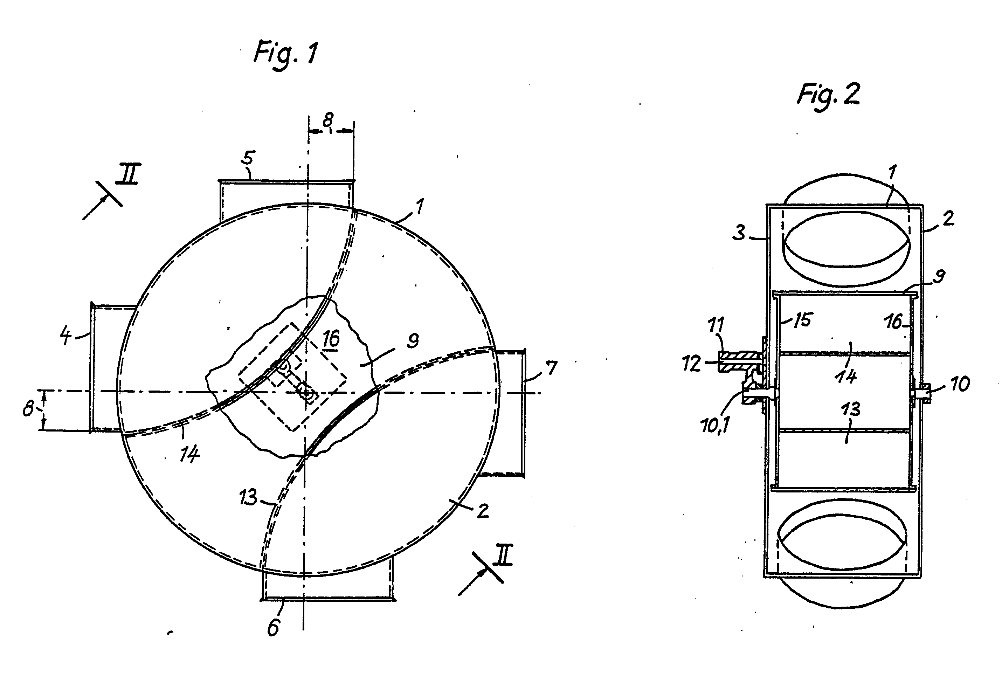

Die Schalt- und Mischkammer besteht aus einem zylindrischen Mantel 1, der durch die kreisscheibenförmigen Seitenbleche 2, 3 geschlossen ist. Der Mantel 1 trägt vier Rohrstutzen 4 bis 7, nämlich den Anschluss 4 für die aus dem Luftführungssystem kommende, mit Lösungsmitteldämpfen beladene Warmluft, den Anschluss 5 zum Abführen von Warmluft ins Freie, den Anschluss 6 zur Frischluftzufuhr und den Anschluss 7, durch den die Luft dem Trocknungsprozess zugeführt wird. Die Anschlussstutzen 4 bis 7 sind zu den ein Achsenkreuz bildenden Mittellinien in der aus Fig. 1 ersichtlichen Weise derart versetzt, dass die inneren Ränder der jeweils miteinander verbundenen Stutzen von den Mittellinien einen grösseren Abstand aufweisen als die äusseren Ränder. Der geringere Abstand 8 der äusseren Ränder der Stutzen 4, 5 zu den Mittellinien ist zur Verdeutlichung eingezeichnet worden.

In dem aus dem Mantel 1 und den Stirnblechen 2, 3 gebildeten Gehäuse ist eine Stelleinrichtung 9 angeordnet, die auf einer in den Stirnblechen 2, 3 drehbar gelagerten Achse 10 befestigt ist. Auf dem Achsstummel 10.1 ist ein Hebel 11 mit einem Rastbolzen 12 aufgeklemmt, der in in verschiedenen Winkelstellungen auf dem Stirnblech angeordneten Fixierbohrungen einrasten kann.

Die Stelleinrichtung 9 besteht aus zwei bogenförmig ausgebildeten Leitblechen 13, 14, die durch Seitenbleche 15, 16 miteinander verbunden sind.

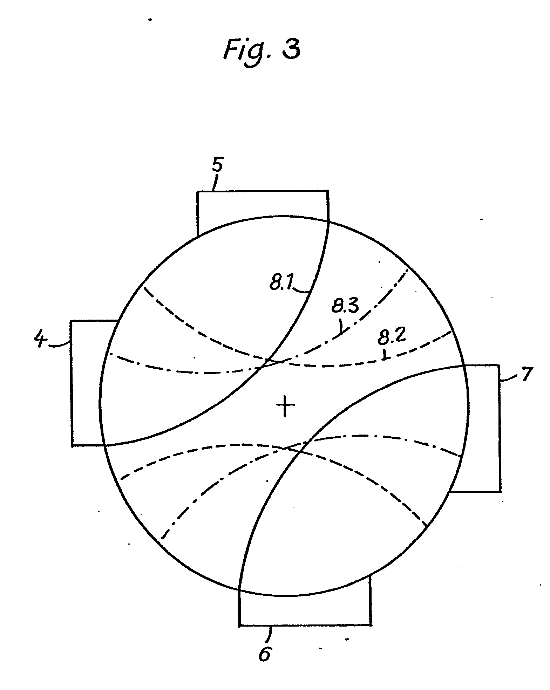

Durch den Versatz der Anschlüsse um den Betrag 8 und durch die bogenförmige Ausbildung der Leitbleche 13, 14 können die in Fig. 3 dargestellten, sehr günstigen Stellungen der Stelleinrichtung 9 erreicht werden.

Mit 8.1 ist die Stellung bezeichnet, die durch ausgezogene Linien symbolisiert ist und bei der die aus der Maschine kommende Warmluft durch den Anschluss 5 ins Freie sowie Frischluft durch den Anschluss 6 zur Maschine geleitet wird.

Die strichlierte Stellung 8.2 gestattet es, dass die aus der Maschine kommende Luft direkt dem Anschluss 7 zugeleitet wird. Dadurch wird ein Kreislauf erzeugt, dem weder Frischluft zugeführt noch von dem Abluft abgegeben wird.

Eine Zwischenstellung 8.3 zwischen den beiden bereits genannten Stellungen leitet einen Teil der von der Maschine kommenden Luft ins Freie und lässt es zu, dass auch ein Teil Frischluft von 6 zum Anschluss 7 gelangt.

## Patentanspruch

Drehschieber für Lüftungskanäle, vorzugsweise an Flexo- und Tiefdruckmaschinen mit vier Anschlussstutzen (4-7) in dem zylindrischen Mantel (1) der seitlich durch kreisscheibenförmige Wände (2, 3) geschlossenen Kammer für die Zufuhr und Abfuhr von Warmluft sowie die Zufuhr von Frischluft und Abfuhr von Frischluft oder Umluft bzw. eines Frischluft-Umluft-Gemisches, mit einer im Innern der Kammer auf einer mittig in den kreisscheibenförmigen Wänden gelagerten Welle (10) befestigten Stelleinrichtung, die aus zwei gekrümmten Leitflächen (13, 14) besteht, die mit ihren Seitenkanten die kreisscheibenförmigen Wände (2, 3) und mit ihren Stirnkanten den zylindrischen Mantel (1) der Kammer berühren oder nahezu berühren, durch Stege oder diese verbindende seitliche Fläche mit der Welle (10) verbunden sind, zwischen sich einen Kanal begrenzen und Strömungsverbindungen zwischen gegenüberliegenden und/oder bei benachbarten Anschlussstutzen herstellen und mit einer mit der Welle verbundenen Betätigungseinrichtung (11), dadurch gekennzeichnet, dass die Leitflächen (13, 14) kreisbogenförmig gegeneinander gekrümmt sind und dass die Anschlussstutzen (4, 5, 6, 7) so gegen die ein Achsenkreuz bildenden Mittellinien der zylindrischen Kammer versetzt sind, dass die einander zugewandten Ränder jeweils miteinander verbundener benachbarter Anschlussstutzen (4, 5 bzw. 6, 7) einen grösseren Abstand von der ihnen jeweils zugeordneten Mittellinie aufweisen als die äusseren Ränder.

## Claim

A rotary valve for ventilating ducts, preferably at flexographic and intaglio printing machines, comprising four tubular ports (4-7) in the cylindrical shell (1) of the chamber which is closed at its ends by circular disc walls (2, 3), for supplying and withdrawing warm air and for supplying fresh air and withdrawing fresh air or circulated air or a mixture of fresh air and circulated air, comprising a valve member, which is secured inside the chamber to a shaft (10), which is centrally mounted in the circular disc walls, said valve member comprising two curved vanes (13, 14), the side edges of which contact or almost contact the circular disc walls (2, 3) and the end edges of which contact or amost contact the cylindrical shell (1) of the chamber, which vanes are connected to the shaft (10) by webs or by a lateral surface connecting said webs and define a passage between them and establish a communication between mutually opposite ports and/or adjacent ports, and actuating means (11) connected to the shaft, characterized in that the vanes (13, 14) are curved toward each other along an arc of a circle and the tubular ports (4, 5, 6, 7) are offset in such a manner from the crossing centre lines of the cylindrical chamber that the adjacent edge portions of tubular ports (4, 5 or 6, 7) which communicate with each other at a given time have a larger spacing from the respective associated centre line than the outer edge portions.

**Revendication**

Vanne-papillon pour canaux d'aération, de préférence sur des machines flexographiques et de gravure en creux comportant quatre tubulures de raccordement (4-7) dans le corps cylindrique (1) de la chambre fermée latéralement par des parois en forme de disque circulaire (2, 3) pour l'amenée et l'évacuation d'air chaud ainsi que l'amenée d'air frais et l'évacuation d'air frais ou d'air ambiant au d'un mélange d'air frais et d'air ambiant, un dispositif de réglage fixé à l'intérieur de la chambre sur un arbre (10) monté au centre des parois en forme de disque circulaire, dispositif de réglage consistant en deux ailettes courbées (13, 14) qui touchent ou touchent presque par leurs bords latéraux les parois en forme de disque circulaire (2, 3) et par leurs bords frontaux le corps cylindrique (1) de la chambre, lesdites ailettes étant raccordées par des barres ou la surface latérale raccordant ces dernières avec l'arbre (10) et délimitant entre elles un canal et établissant une communication entre tubulures de raccordement opposées et/ou voisines, et comportant un dispositif de commande (11) relié à l'arbre, caractérisée en ce que les ailettes (13, 14) sont courbées l'une vers l'autre en arc de cercle et que les tubulures de raccordement (4, 5, 6, 7) sont déphasées par rapport à l'intersection des lignes médianes de la chambre cylindrique de manière à ce que les bords adjacents des tubulures voisines (4, 5 ou 6, 7) en communication ont une distance supérieure de leur ligne médiane respective que les bords extérieurs.

Fig. 2

Fig. 1

Fig. 3